# EUROPÄISCHE PATENTSCHRIFT

(11) **EP 3 297 935 B1**
(45) Veröffentlichungstag und Bekanntmachung des Hinweises auf die Patenterteilung: **17.07.2019**
(21) Anmeldenummer: 16709326.9
(22) Anmeldetag: 07.03.2016
(51) Int. Cl.: B65D 85/804

(54) **PORTIONSPACKUNG ZUR ZUBEREITUNG VON GETRÄNKEN UND VERWENDUNG DIESER PORTIONSPACKUNG**
CAPSULE FOR THE PREPARATION OF BEVERAGES AND USE OF THIS CAPSULE
CAPSULE POUR LA PREPARATION DES BOISSONS ET L'USAGE DE CETTE CAPSULE

(30) Priorität: 19.05.2015 DE 102015107817
(43) Veröffentlichungstag der Anmeldung: 28.03.2018
(73) Patentinhaber: Melitta Single Portions GmbH & Co. KG, 32425 Minden (DE)
(72) Erfinder: AUS DER FÜNTEN, Sandra, 33739 Bielefeld (DE); PAHNKE, Jan, 32427 Minden (DE)
(74) Vertreter: Dantz, Jan Henning
(86) Internationale Anmeldenummer: PCT/EP2016/054788
(87) Internationale Veröffentlichungsnummer: WO 2016/184584

(56) Entgegenhaltungen:
- WO-A1-2011/141532
- WO-A1-2012/062842
- WO-A1-2014/001564
- WO-A1-2014/153659
- US-A1- 2011 274 802

## Beschreibung

Die vorliegende Erfindung betrifft eine Portionspackung zur Zubereitung von Getränken, insbesondere Tee oder Kaffee, nach dem Oberbegriff des Anspruches 1.

Die DE 20 2009 009 215 U1 offenbart einen Bausatz mit einer Kapsel, die einen becherförmigen Grundkörper und ein Deckelelement aufweist. Das Deckelelement kann die Kapsel verschließen, so dass in die Kapsel eine für die Getränkezubereitung wirksame Substanz eingefüllt werden kann. Das Befüllen und ein etwaiges Reinigen der Kapsel ist allerdings vergleichsweise aufwändig. Zudem kann bei einem manuellen Befüllen nicht gewährleistet werden, dass eine exakte Dosierung der Substanz gewährleistet wird.

Die DE 10 2007 028 674 offenbart eine wiederbefüllbare Kapsel für eine Maschine zur Getränkezubereitung, bei der ein Öffnen und Schließen der Kapsel möglich ist, um eine Substanz für die Getränkezubereitung zu füllen und zu entfernen. Die Handhabung einer solchen Kapsel ist vergleichsweise aufwändig, und auch hier kann die Dosiermenge nicht genau eingestellt werden.

In der WO 2012/062842 A1 ist eine Kapsel für die Getränkezubereitung gezeigt, die in einen Kapselhalter einfügbar ist und einen optisch auslesbaren Code aufweist, der die Getränkezubereitung steuern kann.

Es ist daher Aufgabe der vorliegenden Erfindung, eine Portionspackung zur Zubereitung von Getränken zu schaffen, bei der zumindest für ein Teil eine mehrfache Benutzbarkeit gegeben ist und die Handhabung einfach ausgestaltet ist.

Diese Aufgabe wird mit einer Portionspackung mit den Merkmalen des Anspruches 1 gelöst.

Erfindungsgemäß umfasst die Portionspackung eine Behälter mit einer zur Getränkezubereitung geeigneten Substanz und einen Adapter, der in eine Maschine zur Getränkezubereitung einsetzbar ist. Dabei ist der Behälter an dem Adapter lösbar fixiert, so dass für die Getränkezubereitung die Einheit aus Adapter und Behälter in die Maschine zur Getränkezubereitung eingesetzt werden kann. Nach der Getränkezubereitung kann dann der Behälter wieder aus dem Adapter entfernt werden, so dass der Adapter für eine Vielzahl von Getränkezubereitungen genutzt werden kann. Die Handhabung durch das Einsetzen und Entfernen des Behälters ist dabei vergleichsweise einfach, da der Benutzer keine aufwändigen Dosiervorgänge vornehmen muss, sondern lediglich den Behälter in den Adapter einsetzt. Da der Adapter die mechanischen Belastungen im Gerät aufnimmt und die Schnittstellen zum Gerät zur Verfügung stellt, kann der Behälter kostenoptimiert hergestellt werden.

Vorzugsweise weist der Adapter eine tassenförmige Aufnahme für den Behälter auf. Dadurch kann das Einsetzen des Behälters einfach ausgestaltet werden, da diese in die Aufnahme eingefügt wird und dort lösbar fixiert wird, beispielsweise über Formschlussmittel oder Anschläge, wobei auch eine klemmende oder rastende Fixierung möglich ist.

In einer weiteren Ausgestaltung der Erfindung ist an dem Behälter mindestens eine Codierung vorgesehen, mittels der mindestens eine Information über die in dem Behälter angeordnete Substanz identifizierbar ist. Eine solche Codierung kann von der Maschine zur Getränkezubereitung eingesetzt werden, um bestimmte Parameter abhängig von der Substanz in dem Behälter zu variieren. Bei der Zubereitung von Tee kann beispielsweise die Wassertemperatur beim Brühvorgang oder die Ziehzeit variiert werden, während bei der Zubereitung von Kaffee der Druck oder die Temperatur variiert werden können. Eine solche Codierung kann mechanisch durch die Formgebung, aber auch durch andere Mittel, beispielsweise Etiketten, Speicher oder andere Elemente, erfolgen.

Erfindungsgemäß weist der Adapter einen Boden auf, an dem Mittel zur Lichtlenkung vorgesehen sind. Die Mittel zur Lichtlenkung können dabei mindestens eine Unterbrechung aufweisen, in die eine Codierung des Behälters einfügbar ist. Dann kann ein Lesegerät einen Lichtstrahl in den Boden des Adapters einstrahlen, der dann wahlweise auf die Codierung trifft oder nicht, so dass dies ein Ausstrahlen des Lichtstrahles beeinflusst, so dass eine Identifizierung des Behälters ermöglicht wird. Die Mittel zur Lichtlenkung können einen am Boden des Adapters eintretenden Lichtstrahl mindestens zweimal umlenken, so dass der Lichtstrahl am Boden des Adapters zumindest teilweise wieder austritt. Dadurch kann auf engem Raum eine Identifizierung des Typs der Getränkesubstanz in dem Behälter vorgenommen werden. Die Codierung kann dabei an dem Behälter mindestens einen vom Boden des Behälters hervorstehenden Vorsprung umfassen, der in einem Lichtstrahl des Lesegeräts positionierbar ist.

Der Adapter besteht vorzugsweise aus einem transparenten Material, insbesondere aus einem Kunststoff. Die Transparenz umfasst vorzugsweise zumindest den Bodenbereich, in dem die optische Erfassung durch ein Lesegerät vorgenommen wird.

Der Behälter besteht vorzugsweise aus einem biologisch abbaubaren Material, beispielsweise einem biologisch abbaubaren Kunststoff, wobei auch Cellulose eingesetzt werden kann. Bei der Getränkezubereitung kann dann der Behälter nach einem Brühvorgang als Einheit entsorgt werden, was sich aufgrund der biologisch abbaubaren Gestaltung nicht nachteilig auf die Umweltbilanz auswirkt. Der Adapter hingegen wird mehrfach wiederverwendet und kann aus einem nicht biologisch abbaubaren Material bestehen.

In einer weiteren Ausgestaltung ist der Behälter zumindest an einer Seite über ein Netz verschlossen. Dadurch ist der Behälter zumindest an einer Seite flüssigkeitsdurchlässig ausgebildet und kann für einen Brühvorgang befüllt werden, beispielsweise mit heißem Wasser bei der Zubereitung von Tee. Das Netz kann dabei nach außen offen sein und wird nicht durch den Adapter überdeckt, so dass nach dem Einsetzen des Behälters eine einfache Handhabung gewährleistet wird. Um den Behälter an dem Adapter auszurichten, können entsprechende Mittel zur Ausrichtung vorgesehen sein, so dass eine Fixierung des Behälters nur in einer einzigen vorbestimmten Position an dem Adapter ermöglicht wird. Dadurch wird gewährleistet, dass eine Codierung an dem Behälter korrekt erfasst werden kann, wenn dieser an dem Adapter fixiert ist.

Die Erfindung wird nachfolgend anhand eines Ausführungsbeispiels mit Bezug auf die beigefügten Zeichnungen näher erläutert. Es zeigen:

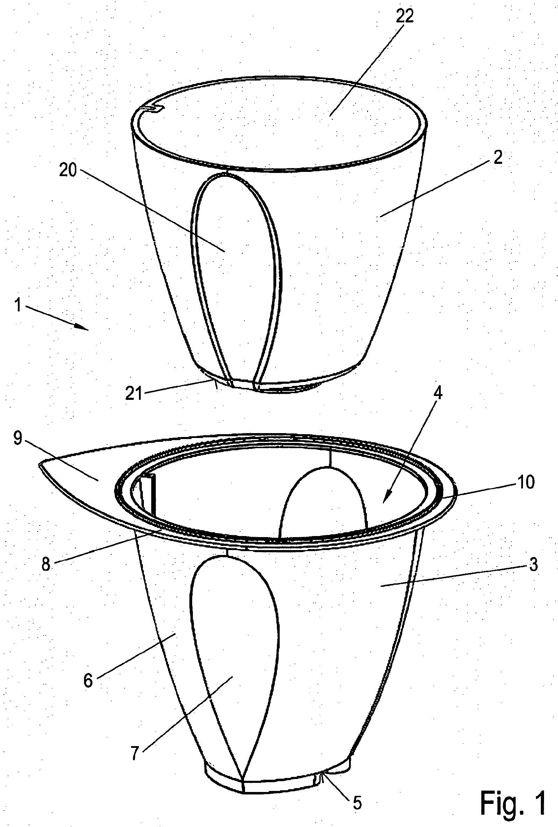

- Figur 1: eine perspektivische Explosionsdarstellung einer erfindungsgemäßen Portionspackung zur Zubereitung von Getränken;
- Figur 2: eine perspektivische Ansicht des Adapters der Portionspackung der Figur 1;
- Figur 3: eine Unteransicht des Adapters der Figur 2;
- Figur 4: eine perspektivische Ansicht des Behälters der Portionspackung der Figur 1;
- Figur 5: eine perspektivische Ansicht der Portionspackung der Figur 1 mit eingesetztem Behälter;
- Figur 6: eine geschnittene Ansicht der Portionspackung der Figur 5;
- Figur 7: eine geschnittene Detailansicht des Bodenbereichs der Portionspackung, und
- Figur 8: eine Unteransicht der Portionspackung mit optischen Erfassungsmitteln.

Eine Portionspackung 1 umfasst einen geschlossenen Behälter 2, in dem eine zur Getränkezubereitung geeignete Substanz, beispielsweise Kaffeemehl oder Tee, angeordnet ist. Der Behälter 2 ist in einem tassenförmigen Adapter 3 lösbar fixierbar, wobei der Behälter 2 in einen Innenraum 4 des Adapters 3 eingesteckt werden kann.

Der Adapter 3 umfasst einen Boden 5 und Seitenwände 6, wobei an den Seitenwänden 6 zumindest eine Abflachung 7 vorgesehen ist. Auf der zum Boden 5 gegenüberliegenden Seite ist ein umlaufender Rand 8 vorgesehen, der radial nach außen hervorsteht und in einem Bereich einen hervorstehenden Griffabschnitt 9 ausbildet. An dem umlaufenden Rand 8 ist eine zur Oberseite hin hervorstehende ringförmige Dichtung 10 ausgebildet, die ein Abdichten ermöglicht, wenn der Adapter 3 mit dem Behälter 2 in eine Brühkammer einer Maschine zur Getränkezubereitung eingesetzt wird. Es ist auch möglich, an der Brühkammer eine Dichtung vorzusehen, so dass der Rand 8 nur einen Anschlag oder eine Auflage für die Dichtung ausbildet.

Der Behälter 2 besitzt eine Kontur, die im Wesentlichen an den Innenraum 4 des Adapters 3 angepasst ist, so dass der Behälter 2 im Wesentlichen formschlüssig in den Adapter 3 eingefügt werden kann. Der Behälter 2 umfasst einen Boden 21, der auf den Boden 5 aufgesetzt werden kann. Ferner sind an dem Behälter 2 Seitenwände vorgesehen, die eine Abflachung 20 aufweisen, und die Abflachung 20 kann benachbart zu der Abflachung 7 an den Adapter 3 positioniert werden. An einer Oberseite des Behälters 2 ist ein Netz 22 vorgesehen, das flüssigkeitsdurchlässig ist, um ein Einströmen von heißem Wasser in den Behälter 2 für die Getränkezubereitung zu ermöglichen. Es ist auch möglich, statt dem Netz 22 eine flüssigkeitsdichte Abdeckung vorzusehen, die dann bei der Getränkezubereitung perforiert wird. Zudem kann die Abdeckung oder das Netz auch lösbar an dem Behälter 2 fixiert sein.

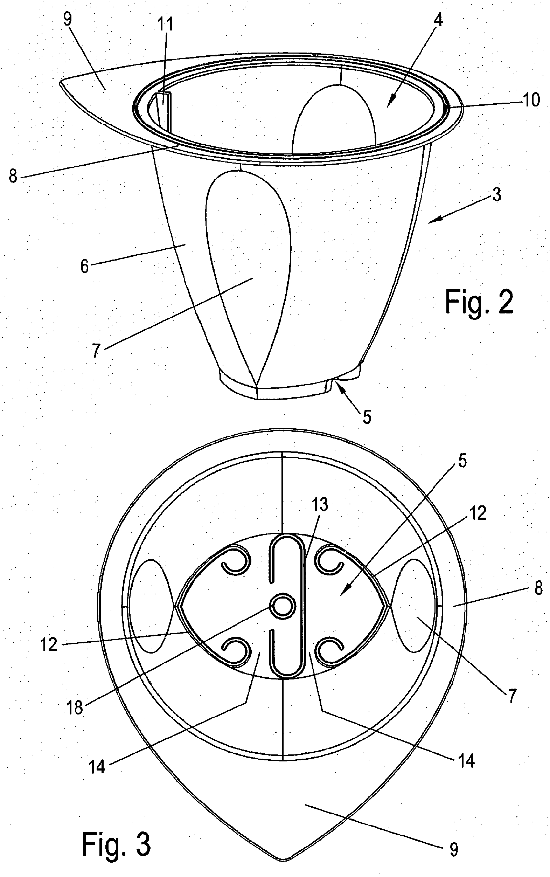

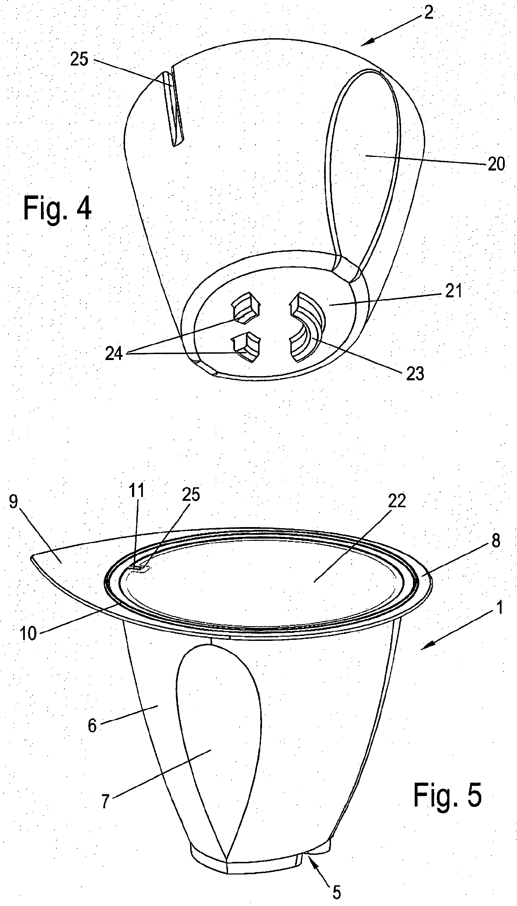

Um den Behälter 2 nur in einer einzigen Position an dem Adapter 3 positionieren zu können, sind entsprechende Positionierungsmittel ausgebildet. Wie in Figur 2 zu erkennen ist, steht eine Leiste 11 benachbart zu dem Griffabschnitt 9 in den Innenraum 4 hervor. Diese Leiste 11 wirkt mit einer nutförmigen Aussparung 25 zusammen, die an einer Seitenwand des Behälters 2 angeformt ist, wie dies in Figur 4 gezeigt ist. Es ist natürlich auch möglich, andere Positionierungsmittel vorzusehen, beispielsweise kann an dem Behälter 2 eine Leiste statt einer Aussparung 25 vorgesehen werden, oder die Form der Positionierungsmittel kann abgewandelt werden. In jedem Fall sorgen die Positionierungsmittel dafür, dass der Behälter 2 nur in einer einzigen Position so in den Innenraum 4 eingesetzt werden kann, so dass der obere Rand 8 des Adapters 3 im Wesentlichen flächenbündig mit dem Netz 22 angeordnet ist.

Der Behälter 2 umfasst an dem Boden 21 noch eine Codierung, die durch einen gebogenen leistenförmigen Vorsprung 23 und zwei kürzere Vorsprünge 24 gebildet sind. Die Vorsprünge 23 und 24 stehen von einer ebenen Bodenfläche hervor und können eine Information über die in dem Behälter 2 angeordnete Substanz bereitstellen. Die Vorsprünge 23 und 24 können je nach Substanz in der Länge und Form variiert werden.

In Figur 3 ist die Unterseite des Adapters 3 gezeigt. An dem Adapter 3 ist an dem Boden 5 eine ebene Bodenfläche vorgesehen, von der stegförmige Führungsmittel 12 und 13 hervorstehen. Diese Führungsmittel 12 und 13 können mit Führungsmitteln an einer Maschine zur Getränkezubereitung zusammenwirken, insbesondere um die Portionspackung entlang eines Schachtes zu führen, damit diese dann benachbart zu einer Brühkammer korrekt positioniert wird. Zudem ist mittig eine Auskoppelfläche 18 vorgesehen, die mit einem Lesegerät der Maschine zur Getränkezubereitung zusammenwirkt, um eine Erkennung durchzuführen, welcher Typ einer Getränkesubstanz in dem Behälter 2 angeordnet ist. Die Führungsmittel 12 und 13 sind dabei an einer Außenseite des Bodens 5 angeordnet, während Elemente für die Erkennung des Behältertyps an der Innenseite des Bodens 5 vorgesehen sind. An den äußeren Führungsmitteln ist zwischen den V-förmigen Führungsmitteln 12 und einem mittleren Führungsmittel 13 ein Spalt 14 vorgesehen, der die Fallrichtung der Portionspackung 1 in einem Schacht vorgibt.

In Figur 5 ist die Portionspackung mit eingesetztem Behälter 2 gezeigt. Die Leiste 11 greift in die Aussparung 25 des Behälters 2 ein. Die Oberseite des Behälters 2, die das Netz 22 aufweist, ist flächenbündig zu dem Rand des Adapters ausgerichtet. In dieser Form kann die Portionspackung in einer Maschine zur Getränkezubereitung eingesetzt werden.

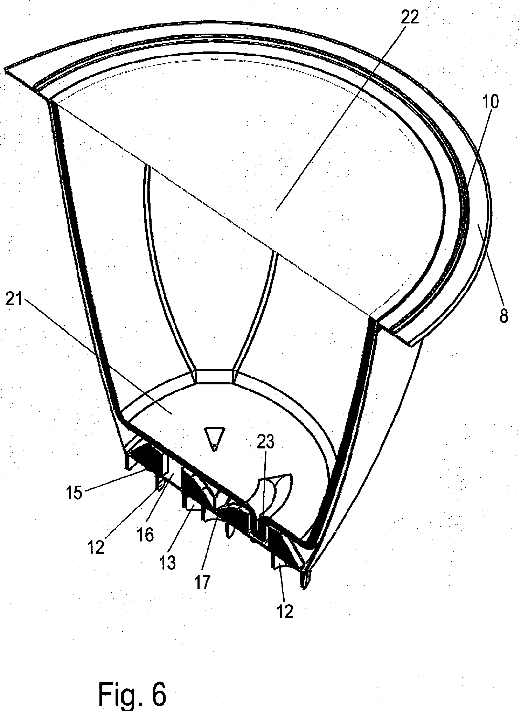

In Figur 6 ist ein Schnitt durch eine Portionspackung mit eingesetztem Behälter 2 gezeigt. Es ist erkennbar, dass der Boden 21 des Behälters 2 nicht unmittelbar auf dem Boden 5 des Adapters 3 aufliegt, sondern dazwischen Mittel zur Lichtlenkung vorgesehen sind. Diese Mittel zur Lichtlenkung sind durch Blöcke 15 und 17 gebildet, die an der Innenseite des Adapters 3 hervorstehen. Zwischen den Blöcken 15 und 17 kann eine Unterbrechung 16 vorgesehen sein, in die eine Codierung des Behälters 2 einfügbar ist.

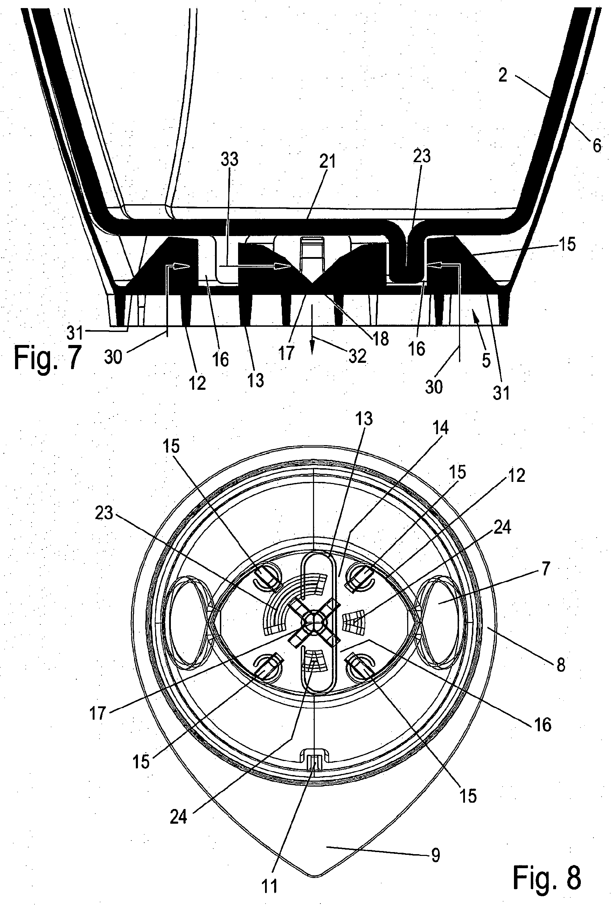

In der vergrößerten Ansicht der Figur 7 ist erkennbar, dass zur Erfassung des Behältertyps zunächst in die Einkoppelflächen 31 Licht eingestrahlt wird, wie dies mit den Pfeilen 30 schematisch dargestellt ist. Hinter den Einkoppelflächen 32 sind Blöcke 15 vorgesehen, die den eingetretenen Lichtstrahl in Richtung Behältermitte umlenken. Der Lichtstrahl verläuft nach der Umlenkung in einem Bereich der Lichtleitung gemäß dem Pfeil 33 im Wesentlichen parallel zu dem Boden 5. Von den äußeren Blöcken 15 können die Lichtstrahlen zu den inneren Blöcken 17 gelangen, die ebenfalls zur Lichtumlenkung ausgebildet sind und es ermöglichen, dass der Lichtstrahl durch die Blöcke 17 wieder derart umgelenkt wird, dass dieser an der Auskoppelfläche 18 durch den Boden 5 wieder nach unten austritt, wie dies mit dem Pfeil 32 schematisch dargestellt ist. Die Mittel zur Lichtlenkung können somit einen in den Boden eintretenden Lichtstrahl im Wesentlichen um 180° umlenken, so dass benachbart zu einer Lichtquelle ein Lichtsensor vorgesehen werden kann, mittels dem erfassbar ist, ob der jeweilige Lichtstrahl an einer Austrittsfläche austritt oder nicht.

In Figur 7 ist auf der linken Seite an einer Unterbrechung 16 keine Codierung des Behälters 2 eingefügt, so dass ein Lichtstrahl von dem Block 15 zu dem Block 17 umgelenkt werden kann, der den Lichtstrahl dann wieder zu dem Boden 5 hin ausstrahlt und ein benachbart angeordneter Sensor erfassen kann, dass hier keine Unterbrechung des Lichtstrahls vorgenommen wurde. Auf der rechten Seite in Figur 7 hingegen ist der Vorsprung 23 in der Unterbrechung 16 angeordnet, so dass ein eintretender Lichtstrahl von dem Block 15 durch den Vorsprung 23 blockiert wird. Dadurch erreicht der Lichtstrahl nicht mehr den Block 17 benachbart zu dem Vorsprung 23 und ein Sensor benachbart zu diesem Block 15 kann dann keinen austretenden Lichtstrahl mehr erfassen. Auf diese Weise ist es möglich, Informationen über die in den Behälter 2 angeordnete Substanz abzuspeichern.

Wie in Figur 8 gezeigt ist, sind bei dem dargestellten Ausführungsbeispiel vier Blöcke 15 vorgesehen, die jeweils einen eingekoppelten Lichtstrahl zur Behältermitte umlenken können, sofern keine Codierung in Form der Vorsprünge 23 oder 24 den Weg des Lichtstrahls blockiert. Anschließend können die Blöcke 17 den Lichtstrahl erneut umlenken und aus dem Behälter auskoppeln. In dem dargestellten Ausführungsbeispiel dienen die kürzeren Vorsprünge 24 dazu, eine Standsicherheit des Behälters 2 zu gewährleisten und diesen nur innerhalb des Adapters 3 auszurichten. Der längere bogenförmige Vorsprung 23 hingegen ist in der Bahn eines Lichtstrahls zwischen dem benachbarten äußeren Block 15 und dem radial mittleren Block 17 angeordnet, so dass ein Lichtstrahl unterbrochen wird. Insofern sind an dem Boden 5 des Adapters 3 und des Behälters 2 vier Erkennungsmittel vorgesehen, so dass insgesamt 16 verschiedene Behältertypen identifiziert werden können. Die Anzahl der Erkennungsmittel kann jedoch variiert werden, beispielswiese können auch nur zwei oder drei Erkennungsmittel oder mehr als vier Erkennungsmittel am Boden vorgesehen werden.

In dem dargestellten Ausführungsbeispiel besteht der Adapter 3 aus einem transparenten Kunststoffmaterial, das gut für die Lichtleitung und -Umlenkung geeignet ist. Der Adapter 3 kann dabei mehrfach verwendet werden und der Behälter 2 wird lediglich in den Adapter 3 eingefügt für die Getränkezubereitung. Anschließend kann der Behälter 2 als Einheit entsorgt werden, so dass der Benutzer keine aufwändigen Dosier- oder Reinigungsvorgänge vornehmen muss. Der Behälter 2 besteht vorzugsweise aus biologisch abbaubarem Material, insbesondere Kunststoff, Papier oder anderen Materialien.

### Bezugszeichenliste

- 1: Portionspackung
- 2: Behälter
- 3: Adapter
- 4: Innenraum
- 5: Boden
- 6: Seitenwand
- 7: Abflachung
- 8: Rand
- 9: Griffabschnitt
- 11: Leiste
- 12: Führungsmittel
- 13: Führungsmittel
- 14: Spalt
- 15: Block
- 17: Block
- 16: Unterbrechung
- 18: Auskoppelfläche
- 20: Abflachung
- 21: Boden
- 22: Netz
- 23: Vorsprung
- 24: Vorsprung
- 25: Aussparung
- 30: Pfeil (Lichteintritt)
- 31: Einkoppelfläche
- 32: Pfeil (Lichtaustritt)
- 33: Pfeil (Lichtleitung)

## Patentansprüche

1. Portionspackung (1) zur Zubereitung von Getränken, insbesondere Tee oder Kaffee, mit einem Behälter (2), in dem eine zur Getränkezubereitung geeignete Substanz angeordnet ist, wobei der Behälter (2) zumindest bereichsweise flüssigkeitsdurchlässig ist oder bei der Getränkezubereitung perforierbar ist, und einen mehrfach nutzbaren Adapter (3), der in eine Maschine zur Getränkezubereitung einsetzbar ist, wobei der Behälter (2) an dem Adapter (3) lösbar fixiert ist, **dadurch gekennzeichnet, dass** der Adapter (3) einen Boden (5) aufweist, an dem Mittel (15, 17) zur Lichtlenkung vorgesehen sind und die Mittel zur Lichtlenkung (15, 17) einen am Boden (5) des Adapters (3) eintretenden Lichtstrahl mindestens zweimal umlenken und der Lichtstrahl wieder am Boden (5) des Adapters (3) zumindest teilweise austritt.

2. Portionspackung nach Anspruch 1, **dadurch gekennzeichnet, dass** der Adapter (3) eine tassenförmige Aufnahme für den Behälter (2) aufweist.

3. Portionspackung nach Anspruch 1 oder 2, **dadurch gekennzeichnet, dass** an dem Behälter (2) mindestens eine Codierung (23, 24) vorgesehen ist, mittels der mindestens eine Information über die in dem Behälter (2) angeordnete Substanz identifizierbar ist.

4. Portionspackung nach einem der vorhergehenden Ansprüche, **dadurch gekennzeichnet, dass** der Behälter (2) aus einem biologisch abbaubaren Material hergestellt ist.

5. Portionspackung nach einem der vorhergehenden Ansprüche, **dadurch gekennzeichnet, dass** die Mittel (15, 17) zur Lichtlenkung mindestens eine Unterbrechung (16) aufweisen, in die eine Codierung (23, 24) des Behälters (2) einfügbar ist.

6. Portionspackung nach einem der vorhergehenden Ansprüche, **dadurch gekennzeichnet, dass** eine Codierung (23, 24) an dem Behälter (2) mindestens einen vom Boden (21) des Behälters (2) hervorstehenden Vorsprung umfasst, der in einen Lichtstrahl eines Lesegerätes positionierbar ist.

7. Portionspackung nach einem der vorhergehenden Ansprüche, **dadurch gekennzeichnet, dass** der Adapter (3) aus einem transparenten Material, insbesondere aus Kunststoff, hergestellt ist.

8. Portionspackung nach einem der vorhergehenden Ansprüche, **dadurch gekennzeichnet, dass** der Behälter (2) zumindest an einer Seite über ein Netz (22) verschlossen ist.

9. Portionspackung nach Anspruch 8, **dadurch gekennzeichnet, dass** das Netz (22) nach außen offen ist und nicht durch den Adapter (3) überdeckt wird.

10. Portionspackung nach einem der vorhergehenden Ansprüche, **dadurch gekennzeichnet, dass** an dem Adapter (3) und dem Behälter (2) Mittel (11, 25) zur Ausrichtung des Behälters (2) an dem Adapter (3) vorgesehen sind, so dass eine Fixierung des Behälters (2) nur in einer einzigen vorbestimmten Position an dem Adapter ermöglicht wird.

11. Portionspackung nach einem der vorhergehenden Ansprüche, **dadurch gekennzeichnet, dass** der Adapter (3) einen umlaufenden Rand (8) aufweist, der an einer Dichtung oder einem Anschlag an einer Brühkammer anlegbar ist.

12. Verwendung einer Portionspackung (1) nach einem der vorhergehenden Ansprüche in einer Vorrichtung zur Zubereitung eines Brühgetränks, wobei an mindestens einer Einkoppelfläche des Adapters (3) Licht eingestrahlt wird, das an einer Auskoppelfläche des Adapters (3) zumindest teilweise wieder ausgestrahlt wird, wobei zumindest eine Codierung (23, 24) an dem Behälter Licht zumindest teilweise absorbiert.

## Claims

1. A portion pack (1) for preparing beverages, in particular tea or coffee, having a container (2) in which a substance suitable for beverage preparation is arranged, wherein the container (2) is at least regionally liquid-permeable or can be perforated during the beverage preparation, and a repeatedly usable adapter (3), which is insertable into a machine for beverage preparation, wherein the container (2) is detachably fixed on the adapter (3) **characterized in that** the adapter (3) has a bottom (5), on which means (15, 17) for light deflection are provided and that the means for light deflection (15, 17) deflect a light beam entering at the bottom (5) of the adapter (3) at least two times and the light beam at least partially exits again at the bottom (5) of the adapter (3).

2. The portion pack according to Claim 1, **characterized in that** the adapter (3) has a cup-shaped receptacle for the container (2).

3. The portion pack according to Claim 1 or 2, **characterized in that** at least one coding (23, 24) is provided on the container (2), by means of which at least one item of information about the substance arranged in the container (2) is identifiable.

4. The portion pack according to any one of the preceding claims, **characterized in that** the container (2) is produced from a biologically decomposable material.

5. The portion pack according to any one of the preceding claims, **characterized in that** the means (15, 17) for light deflection have at least one interruption (16), into which a coding (23, 24) of the container (2) is insertable.

6. The portion pack according to any one of the preceding claims, **characterized in that** a coding (23, 24) on the container (2) comprises at least one projection protruding from the bottom (21) of the container (2), which is positionable in a light beam of a read device.

7. The portion pack according to any one of the preceding claims, **characterized in that** the adapter (3) is produced from a transparent material, in particular from plastic.

8. The portion pack according to any one of the preceding claims, **characterized in that** the container (2) is closed at least on one side via a net (22).

9. The portion pack according to Claim 8, **characterized in that** the net (22) is open outward and is not covered by the adapter (3).

10. The portion pack according to any one of the preceding claims, **characterized in that** means (11, 25) for aligning the container (2) on the adapter (3) are provided on the adapter (3) and the container (2), so that fixing of the container (2) is enabled only in a single predetermined position on the adapter.

11. The portion pack according to any one of the preceding claims, **characterized in that** the adapter (3) has a circumferential edge (8), which can be applied to a seal or a stop on a brewing chamber.

12. A use of a portion pack (1) according to any one of the preceding claims in a device for preparing a brewed beverage, wherein light is irradiated in on at least one coupling surface of the adapter (3), which light is irradiated out again at least partially on a decoupling surface of the adapter (3), wherein at least one coding (23, 24) on the adapter at least partially absorbs light.

## Revendications

1. Capsule (1) destinée à la préparation de boissons, en particulier de thé ou de café comprenant un réceptacle (2) renfermant une substance adaptée à la préparation de boissons, le réceptacle (2) étant au moins par zones perméable aux liquides, ou pouvant être perforé lors de la préparation de la boisson, ainsi qu'un adaptateur (3) utilisable plusieurs fois qui peut être introduit dans une machine de préparation de boissons, le réceptacle (2) étant fixé de manière amovible sur l'adaptateur (3),
**caractérisée en ce que**
l'adaptateur (3) comporte un fond (5) sur lequel sont prévus des moyens (15, 17) de déviation de la lumière, les moyens de déviation de la lumière (15, 17) réorientent au moins deux fois un faisceau lumineux entrant au fond (5) de l'adaptateur (3) et le faisceau lumineux ressort au moins partiellement du fond (5) de l'adaptateur (3).

2. Capsule conforme à la revendication 1,
**caractérisée en ce que**
l'adaptateur (3) comporte un logement en forme de gobelet pour la réception du réceptacle (2).

3. Capsule conforme à la revendication 1 ou 2,
**caractérisée en ce qu'**
il est prévu sur le réceptacle (2) au moins un codage (23, 24) au moyen duquel peut être identifiée une information concernant la substance renfermée dans le réceptacle (2).

4. Capsule conforme à l'une des revendications précédentes,
**caractérisée en ce que**
le réceptacle (2) est réalisé en un matériau biodégradable.

5. Capsule conforme à l'une des revendications précédentes,
**caractérisée en ce que**
les moyens (15, 17) de déviation de la lumière comportent au moins une rupture (16) dans laquelle peut être inséré un codage (23, 24) du réceptacle (2).

6. Capsule conforme à l'une des revendications précédentes,
**caractérisée en ce qu'**
un codage (23, 24) situé sur le réceptacle (2) comporte au moins une saillie dépassant du fond (21) de ce réceptacle (2) qui peut être positionnée dans le faisceau lumineux d'un appareil de lecture.

7. Capsule conforme à l'une des revendications précédentes,
**caractérisée en ce que**
l'adaptateur (3) est réalisé en un matériau transparent, en particulier en un matériau synthétique.

8. Capsule conforme à l'une des revendications précédentes,
**caractérisée en ce que**
le réceptacle (2) est fermé par une toile (22) au moins sur un côté.

9. Capsule conforme à la revendication 8,
**caractérisée en ce que**
la toile (22) est ouverte vers l'extérieur et n'est pas recouverte par l'adaptateur (3).

10. Capsule conforme à l'une des revendications précédentes,
**caractérisée** en qu'
il est prévu sur l'adaptateur (3) et sur le réceptacle (2) des moyens (11, 25) permettant d'orienter le réceptacle (2) sur l'adaptateur (3) de sorte qu'une fixation du réceptacle (2) sur l'adaptateur ne soit possible que dans une seule position prédéfinie.

11. Capsule conforme à l'une des revendications précédentes,
**caractérisée en ce que**
l'adaptateur (3) comporte un bord périphérique (8) qui peut être appliqué sur un joint d'étanchéité ou une butée d'une chambre d'infusion.

12. Utilisation d'une capsule (1) conforme à l'une des revendications précédentes,
dans un dispositif de préparation d'une boisson infusée, dans laquelle sur au moins une surface de couplage de l'adaptateur (3) est rayonnée de la lumière qui ressort au moins partiellement sur une surface de découplage de l'adaptateur (3), au moins un codage (23, 24) situé sur le réceptacle absorbant au moins partiellement la lumière.
